# EUROPEAN PATENT SPECIFICATION

(11) **EP 1 829 933 B1**
(45) Date of publication and mention of the grant of the patent: **22.07.2015**
(21) Application number: 05816782.6
(22) Date of filing: 13.12.2005
(51) Int. Cl.: C08L 101/00, C08K 3/04, C08K 7/00, H04M 1/02

(54) **METHOD OF CONTROLLING SPECIFIC INDUCTIVE CAPACITY, DIELECTRIC MATERIAL, MOBILE PHONE AND HUMAN PHANTOM MODEL**
VERFAHREN ZUR STEUERUNG VON SPEZIFISCHER INDUKTIVER KAPAZITÄT, DIELEKTRISCHES MATERIAL, MOBILTELEPHON UND HUMANPHANTOMMODELL
PROCEDE DE CONTROLE DE LA CAPACITE INDUCTIVE SPECIFIQUE, MATERIAU DIELECTRIQUE, TELEPHONE MOBILE ET MODELE FANTOME HUMAIN

(30) Priority: 17.12.2004 JP 2004365369
(43) Date of publication of application: 05.09.2007
(73) Proprietor: ASAHI FR R&D Co., Ltd., Saitama 3300801 (JP)
(72) Inventor: TAKAGI, Kazuhisa, KK Fine Rubber Kenkyuusho, Nishishirakawa-gun, Fukushima 969-0221 (JP); TAKAMI, Yuko, KK Fine Rubber Kenkyuusho, Nishishirakawa-gun, Fukushima 969-0221 (JP); KOYAMASHITA, Yuji, KK Fine Rubber Kenkyuusho, Nishishirakawa-gun, Fukushima 969-0221 (JP)
(74) Representative: Naylor, Matthew John
(86) International application number: PCT/JP2005/022829
(87) International publication number: WO 2006/064783

(56) References cited:
- EP-A1- 0 102 650
- EP-A1- 0 480 680
- EP-A1- 1 052 654
- EP-A1- 2 131 642
- WO-A1-03/016048
- JP-A- 8 239 513
- JP-A- 8 274 493
- JP-A- 08 239 513
- JP-A- 08 274 493
- JP-A- 09 324 128
- JP-A- 2000 097 878
- JP-A- 2000 357 419
- JP-A- 2003 105 108
- JP-A- 2004 153 807
- JP-A- 2005 317 945
- US-A1- 2003 047 718
- US-A1- 2003 096 104
- US-A1- 2003 164 427
- US-A1- 2003 213 939

## Description

### Technical Field

The present invention relates to a method of controlling a specific inductive capacity for controlling the values of the real number portion and the imaginary number portion of the complex specific inductive capacity of a dielectric material, a dielectric material, a mobile phone and a human phantom model. More particularly, the invention relates to a method of controlling a specific inductive capacity which a desired specific inductive capacity can be obtained by controlling the value of the real number portion and the imaginary number portion of the complex specific inductive capacity of the dielectric material, a dielectric material capable of having a desired specific inductive capacity by utilizing the method, a mobile phone capable of being enhanced in antenna radiation efficiency by utilizing the dielectric material, and a human phantom model capable of providing a human phantom model having specific inductive capacity values approximate to those of portions of a human body.

### Background Art

Hitherto, it has been desired to develop a mobile phone which is suppressed in the influence of electromagnetic waves on human bodies and is enhanced in the radiation efficiency of an antenna. Patent Document 1 pertaining to a prior application of the present inventors discloses a mobile phone in which a dielectric material in a sheet-like shape not more than 1 mm in thickness is used and the combination of the values of the real number portion and the imaginary number portion of the specific inductive capacity of the dielectric material is within a predetermined region.
Patent Document 1: Japanese Patent Laid-open No. 2004-153807

However, in the cases of the dielectric materials in the related art, it is difficult to control the values of the real number portion and the imaginary number portion of the complex specific inductive capacity of the dielectric material. Particularly, in the cases of ceramic-based dielectric materials, left the values of the imaginary number portion and the real number portion of a complex specific inductive capacity ε be εᵣ" and εᵣ' respectively, then the value of εᵣ" has been limited to about several tens.

On the other hand, in order to empirically make clear the propagation characteristics of electromagnetic waves in the case where a transmission path is shielded by a human body or in the case where an antenna is disposed in the vicinity of a human body, a phantom designed to simulate the electrical properties of a human body is needed. Besides, in the medical field, medical treatments by use of electromagnetic waves have hitherto been conducted. In the case of performing such a medical treatment, a simulation by use of a human phantom model formed of blank materials according to the specific inductive capacities of portions of the human body has been carried out beforehand, in order to estimate the temperature distribution obtained upon irradiation with electromagnetic waves or to determine the settings of electromagnetic waves suitable for obtaining the intended therapeutic effect. As the blank material for such a human phantom model, there have been used liquids and ceramics. However, in the case of a liquid, the composition of the liquid would vary due to evaporation of water and, therefore, it has been necessary to remake the human phantom model each time of use thereof. On the other hand, in the case of a ceramic, there have been difficulties in the handling thereof, because of the heavy weight, high hardness and non-flexibility thereof. Thus, it has been desired to develop a novel blank material which is free of the above-mentioned problems and which is capable of providing specific inductive capacities according to those of portions of a human body.

EP-A-1952654 describes a cable semiconducting shield, with a core surrounded by a polymer and carbon nanotubes. EP-A-2131642 describes an electromagnetic shield and RFID plate. JP-A-08239513 describes a composite dielectric substance and phantom model.

### Disclosure of Invention

### Problems to Be Solved by the Invention

The present invention has been made in consideration of the above situation. Accordingly, it is an object of the invention to provide a method of controlling a specific inductive capacity which makes it possible to control the values of the real number portion and the imaginary number portion of the complex specific inductive capacity of a dielectric material. In addition, in order to achieve a specific inductive capacity and theories of absorption, reflection and transmission, it is another object of the invention to provide a dielectric material capable of acquiring a desired specific inductive capacity by utilizing the method of controlling a specific inductive capacity, particularly a dielectric material capable also of having a specific inductive capacity according to that of each portion of a human body, a mobile phone in which the dielectric material capable of acquiring a desired specific inductive capacity is mounted as an electromagnetic wave controlling member, and a human phantom model in which the dielectric material capable of acquiring a desired specific inductive capacity is used as a blank material.

### Means for Solving the Problems

The present inventors, as a result of their extensive and intensive investigations for attaining the above objects, have found out that in the case of a dielectric blank material having a carbon material dispersed in a polymer base material, when a carbon selected among spherical carbon (spherical graphite), flat carbon (flat graphite), a carbon fiber (graphite fiber) of a low aspect ratio and carbon nanotube is used in combination with a conductive carbon of a developed structure as the carbon material, it is possible to control in wide ranges the values of the real number portion and the imaginary number portion of the complex specific inductive capacity of the dielectric material, and to obtain a desired specific inductive capacity, by varying the blending quantities of the carbon and the conductive carbon and the blending ratio thereof. Based on the finding, the present invention has been completed.

According to the present invention, there is provided a method of manufacture of a dielectric material having a specific inductive capacity, as set out in claim 1

Furthermore, according to the present invention, there is provided (2) a dielectric material as set out in claim 8.

### Effects of the Invention

According to the method of manufacturing a dielectric material having a specific inductive capacity of the present invention, the values of the real number portion and the imaginary number portion of a complex specific inductive capacity can be controlled at a high level. Therefore, it is possible to obtain a dielectric material having a desired specific inductive capacity and, for example, to manufacture dielectric materials having specific inductive capacities according to portions of a human body. Accordingly, it is possible to obtain a human phantom model blank material which is lighter in weight than those according to the related art and which is flexible and easy to handle. In addition, by utilizing such a dielectric material as an electromagnetic wave controlling member in a mobile phone, it is possible to enhance the radiation efficiency of antenna in the mobile phone. Furthermore, it is possible to obtain a human phantom model having specific inductive capacities according to portions of a human body.

### Brief Description of the Drawings

[FIG. 1] FIG. 1 is a graph showing the results of Examples 1 to 6 of the present invention and Comparative Examples 1 to 8.
[FIG. 2] FIG. 2 is a graph showing the relationship between the blending ratio of a conductive carbon based on the total amount of carbon materials and the dielectric loss, in Examples 1 to 5 of the present invention.
[FIG. 3] FIG. 3 is a graph showing the results of Examples 1 to 3, 5 and 6 of the present invention.
[FIG. 4] FIG. 4 is a graph showing the results of Examples 7 to 10 of the present invention and Comparative Examples 11 to 15.
[FIG. 5] FIG. 5 is a graph showing the relationship between the blending ratio of a conductive carbon based on the total amount of carbon materials and the dielectric loss, in Examples 7 to 10 of the present invention.
[FIG. 6] FIG. 6 is a schematic top plan view of a mobile phone, illustrating a configuration example of a mobile phone according to the present invention.

### Description of Reference Numerals

- 1: mobile phone
- 7: dielectric material

### Best Mode for Carrying out the Invention

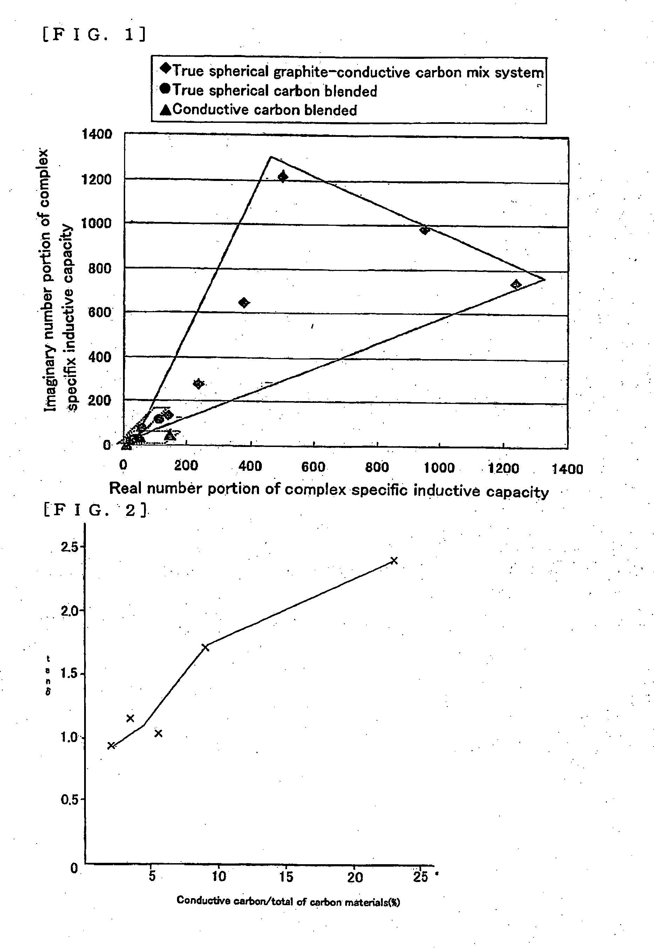

Now, the present invention will be described in detail below. A method of controlling a specific inductive capacity includes using, as carbon materials to be dispersed in a polymer base material of a dielectric material, at least one carbon selected among spherical carbon, flat carbon, carbon nanotube and carbon fiber of an aspect ratio of not more than 11 in combination with a conductive carbon of a developed structure, and controlling the values of the real number portion and the imaginary number portion of the complex specific inductive capacity of the dielectric material through varying the blending quantities thereof in the polymer base material, in other words, varying the blending ratio thereof. More in detail, for example as shown in Examples described later, in the dielectric materials formed by use of carbon in combination with conductive carbon, by varying the blending quantities of the carbon materials, dielectric materials having various values (εᵣ') of the real number portion and various values (εᵣ") of the imaginary number portion of the complex specific inductive capacity can be obtained. For example, in dielectric materials formed by use of spherical graphite (carbon) in combination with conductive carbon, various dielectric materials having real number portion values (ε ᵣ') and imaginary number portion values (εᵣ") in wide ranges as shown in the graph in FIG. 1 can be obtained. In the controlling method, for example, by varying at least one of the blending quantities of the carbon and the conductive carbon so as to vary the total blending quantity of the carbon and the conductive carbon (the total blending quantity of the carbon materials) and the blending ratio of the carbon and the conductive carbon in the carbon materials, it is possible to control the values of the real number portion and the imaginary number portion of the complex specific inductive capacity of the dielectric material at a high level, to control the values themselves (εᵣ' , εᵣ"), and to control the dielectric loss (tanδ)=εᵣ"/εᵣ', which is an index of the ratio of these values, in a wide range. More specifically, for example as shown in Examples described later, in dielectric materials obtained by using spherical graphite (carbon) in combination with conductive carbon, when the total blending quantity of the carbon materials and the blending ratio of the spherical graphite to the whole part of the carbon materials or to the conductive carbon are increased by increasing the blending quantity of the spherical graphite while keeping constant the blending quantity of the conductive carbon, the real number portion value (εᵣ') of the complex specific inductive capacity of the dielectric material obtained tends to increase preferentially, and the dielectric loss (tan δ) = εᵣ"/εᵣ' tends to decrease. On the other hand, when the total blending quantity of the carbon materials and the blending ratio of the conductive carbon to the whole part of the carbon materials or to the spherical graphite are increased, both the real number portion value (εᵣ') and the imaginary number portion value (εᵣ") of the complex specific inductive capacity of the dielectric material obtained are increased, but the imaginary number portion value (εᵣ") tends to increase preferentially, and the dielectric loss (tan δ ) =εᵣ"/εᵣ' tends to increase. Besides, by varying the blending quantities of both the spherical carbon and the conductive carbon so as to vary the total blending quantity thereof and the blending ratio thereof, it is possible to obtain dielectric materials having the values of the real number portion and the imaginary number portion of the complex specific inductive capacity and the values of dielectric loss in wide ranges. Therefore, according to this controlling method, it is possible to control in wide ranges the real number portion and imaginary number portion values (εᵣ', εᵣ") themselves and the dielectric loss, which is an index of the ratio of these values.

In addition, according to the controlling method by varying the blending quantities of the carbon and the conductive carbon so as to vary the blending ratio of the carbon and the conductive carbon in the carbon materials, it is possible to vary the dielectric loss (tan δ) = εᵣ"/εᵣ' of the dielectric material and thereby to control the real number portion value (εᵣ') and the imaginary number portion value (εᵣ") of the complex specific inductive capacity of the dielectric material, without varying the total blending quantity of the carbon and the conductive carbon (the total blending quantity of the carbon materials), for example. To be more specific, for example as shown in Examples described later, in dielectric materials obtained by using carbon nanotube (carbon) in combination with conductive carbon, when the blending ratio of the conductive carbon based on the total blending quantity is increased by increasing the blending quantity of the conductive carbon while decreasing the blending quantity of the carbon so as to keep the total blending quantity constant, the real number portion value (εᵣ') of the complex specific inductive capacity of the dielectric material obtained is little varied, but the imaginary number portion value (εᵣ") is increased, and the dielectric loss (tan δ) = εᵣ"/εᵣ' increases. Therefore, by this controlling method, the dielectric loss can be varied, without varying the total blending quantity of the carbon and the conductive carbon, for example. Accordingly, it is also possible to vary the value of the imaginary number portion, without considerably varying the value of the real number portion, for example.

Here, as the polymer base material in the present invention, those containing a polymeric compound, such as thermoplastic elastomers, thermosetting resins, rubbers, etc. may be used preferably. In order to control specific inductive capacity in wide ranges, however, rubbers among these materials are particularly preferred, and silicone rubbers are further preferred. Examples of the silicone rubbers include methyl vinyl silicone rubber, phenyl silicone rubber, and fluoro silicone rubber, etc. Incidentally, silicone polymers are in general commercialized in the state of being filled with silica, and in Examples which will be described later, those silicone compounds which are available to anyone were used.

In the present invention, as carbon materials for providing a dielectric property and conductivity, a carbon selected among spherical carbon, flat carbon, carbon nanotube and carbon fiber of an aspect ratio of not more than 11 is used in combination with a conductive carbon. Here, examples of the spherical carbon include spherical graphite which is obtained by heat treating a carbon called mesophase globules and being a coal pitch carbon and which is called mosocarbon microbeads. Besides, various spherical carbons commercialized as spherical carbon, spherical graphite, true spherical carbon, true spherical graphite, etc. may also be used. In the present invention, as the shape of the carbon used in combination with the conductive carbon is closer to true sphere, the materials can be mixed more easily and be used at a higher filling factor. In view of this, among the carbons to be used in combination with the conductive carbon, preferred are spherical carbons, among which particularly preferred are those called true spherical graphite and true spherical carbon.

Examples of the flat carbon include scaly graphite and flaky graphite, as described in Patent Document 2, for example.

Patent Document 2: Japanese Patent Laid-open No. 2003-105108

As the carbon nanotube, those having a hollow cylindrical structure obtained or as if obtained by rounding a graphene sheet (independent carbon hexagon net plane) suffice, and may by single-wall nanotube (SWNT), multi-wall nanotube (MWNT) or cup stack nanotube. Comparing carbon fiber and carbon nanotube which are fibrous carbon materials, carbon nanotube is lower in electric resistance, since it has the hollow cylindrical structure obtained or as if obtained by rounding a graphene sheet and its structure is uniform. Besides, theoretically, a material having a lower electric resistance has a higher value of imaginary number portion of specific inductive capacity; therefore, use of carbon nanotube among fibrous carbon materials promises easier control of the values of real number portion and imaginary number portion of complex specific inductive capacity. Examples of carbon black with an aspect ratio of not more than 11 include pitch-based carbon fibers and PAN-based carbon fibers, etc. Incidentally, a preferable rang of the aspect ratio is 3 to 11. If the aspect ratio is too high, electrical anisotropy may be generated, or it may be impossible to obtain such a width as to enable the control of specific inductive capacity aimed at in the present invention, or it may be impossible to achieve stable control. On the other hand, if the aspect ratio is too low, practically, it may be difficult to classify the carbon material as carbon fiber.

The conductive carbon of a developed structure, to be used in combination with the above-mentioned carbon as carbon materials in the present invention, will be described below. The conductive carbon is a carbon material capable of imparting conductivity when blended in the polymer matrix in a smaller addition quantity than general carbon material, and it is controlled in physical characteristics such as structure, porosity, primary particle diameter, etc. For example, examples of values indicating the degree of development of structure include DBP oil absorption and BET specific surface area. When a conductive carbon higher in these values is used, it is possible to impart conductivity with a smaller addition quantity; for example, it is possible to raise the value of the imaginary number portion of complex specific inductive capacity while suppressing the rise in the value of the real number portion. Specifically, it is preferable to use, as the conductive carbon in the present invention, a carbon material having a DBP oil absorption of not less then 100 cm³/100 g, more preferably not less than 160 cm³/100 g, and further preferably not less than 360 cm³/100 g. If the DBP oil absorption is too low, the structure may have been developed insufficiently, and conductivity may be low, so that it may be difficult to achieve the control of dielectric constant aimed at in the present invention. The upper limit of the preferable DBP oil absorption is not particularly restricted; however, in considerable of the possibility of breakage of the structure at the time of dispersion into the polymer material, the DBP oil absorption is preferably not more than 700 cm³/100 g. Incidentally, the DBP oil absorption can be measured according to ASTM D 2414-79. In addition, as for the BET specific surface area, it is preferable to use a carbon material having a BET specific surface area of not less than 30 m²/g, more preferably not less than 65 m²/g, and further preferably not less than 800m²/g. The BET specific surface area is a factor which determines the conductivity together with the above-mentioned structure. If the BET specific surface area is too small, the conductivity of the conductive carbon particles alone may not be enhanced, making it difficult to achieve the control of dielectric constant aimed at in the present invention. The upper limit of the preferable specific surface area is not particularly restricted; however, taking surface stability into account, the specific surface area is preferably not more than 3000 m²/g. More specific examples of the conductive carbon include those which are commercialized as Ketchen black and acetylene black, etc.

In the case where it is intended to control the specific inductive capacity of the dielectric material having the carbon material dispersed in the polymer base material, as will be shown in Examples and Comparative Examples described later, if the spherical carbon, flat carbon, carbon nanotube or carbon fiber of a low aspect ratio is only added, variation in the blending quantity would result in that both the real number portion and the imaginary number portion of the complex specific inductive capacity are varied to be substantially equal values. On the other hand, if the conductive carbon is only added, as will be shown in Comparative Examples described later, an increase in the blending quantity is attended by a large increase in the value of the real number portion of the complex specific inductive capacity, but the increase in the value of the imaginary number portion would be comparatively smaller. In contrast to these cases, in the controlling method, in the system where the spherical carbon, flat carbon, carbon nanotube or carbon fiber of a low aspect ratio and the conductive carbon are mixed into the polymer base material, an increase in the blending quantity of the conductive carbon, for example, causes an increase preferentially in the value of the imaginary number portion of the complex specific inductive capacity, whereby it is possible to obtain even a dielectric material with the imaginary number portion value εᵣ" of the complex specific inductive capacity at 0.9 GHz, for example, of not less than 100. Besides, where the carbon selected among spherical carbon, flat carbon, carbon nanotube and carbon fiber of a low aspect ratio and the conductive carbon are mixedly added to the polymer base material and the blending quantities are varied so as to vary the total blending quantity thereof and the blending ratio thereof, the values of the real number portion and the imaginary number portion of the complex specific inductive capacity can be controlled in the ranges which are not available where one of these carbon material is added singly. For example, the values of the real number portion and the imaginary number portion of the complex specific inductive capacity can be controlled at least so that the complex specific inductive capacity falls in the region surrounded by solid lines so as to include the rhombic symbols in the graph of FIG. 1 showing the results of Examples 1 to 6 and Comparative Examples 1 to 8 described later. Furthermore, by controlling the real number portion value (εᵣ') and the imaginary portion value (εᵣ") of the complex specific inductive capacity at 0.9 GHz to arbitrary values, for example, in the range of εᵣ'=3 to 1300 and the range of εᵣ"=0.2 to 1300, for example, the dielectric loss (tan δ) can be controlled to within the range of 0.1 to 2.5.

In the case of the controlling method the values of the real number portion and the imaginary number portion of the complex specific inductive capacity of the dielectric material, i.e., the real number portion and imaginary number portion values themselves (εᵣ', εᵣ"), the dielectric loss (tan δ = ε ᵣ"/εᵣ') and the like are not particularly limited. For example, in the case where it is intended to achieve control as to a dielectric material to be used for a human phantom model, it is preferable that the real number portion value of the complex specific inductive capacity at 0.9 GHz can be controlled in the range of about 1 to 100 and that the values of the real number portion and the imaginary number portion can be controlled to respective desired values. It is more preferable that, for example, the real number portion at 0.9 GHz can be controlled to a value in the range of about 1 to 100 and that the value of the imaginary number portion can be controlled to an arbitrary value in the range of about 0.2 to 100; further, it is preferable that, for example, the dielectric loss (tan δ) can be controlled to within the range of 0.1 to 1. In this case, specifically, the use of spherical graphite and conductive carbon (Ketchen black) can be exemplified as follows.

For example, in the case where it is intended to control the dielectric constant of a dielectric material by blending the spherical graphite singly, when 150 parts by weight of spherical graphite is singly added to 100 parts by weight of a polymeric compound (silicone rubber), there is obtained a dielectric material with a complex specific inductive capacity at 0.9 GHz of ᵣ' =38, εᵣ"=27, and tan δ =0.7. In contrast, when 1 part by weight of a conductive carbon is further added to this, there is obtained a dielectric material with a complex specific inductive capacity at 0.9 GHz of εᵣ'=103, εᵣ"=86, and tan δ =0.8. Besides, when 100 parts by weight of spherical graphite is singly added to 100 parts by weight of the polymeric compound (silicone rubber), there is obtained a dielectric material with a complex specific inductive capacity at 0.9 GHz of εᵣ'=16, εᵣ"=7, and tan δ =0.4. In contrast, when 3 parts by weight of a conductive carbon is further added to this, there is obtained a dielectric material with a complex specific inductive capacity at 0.9 GHz of εᵣ'=53, ε ᵣ"=41, and tan δ =0.8; when 4 parts by weight the conductive carbon is added, there is obtained a dielectric material with a complex specific inductive capacity at 0.9 GHz of ε ᵣ'=100, εᵣ"=90, and tan δ =0.9. Thus, the dielectric materials can be controlled to have dielectric constants equal to those of bone, skin, brain, blood vessel, etc.

On the other hand, for example, in the case where it is intended to achieve a control as to a dielectric material to be used for a mobile phone, in consideration of that a dielectric material with a higher dielectric constant is desirable, the value of the real number portion of the complex specific inductive capacity at 0.9 GHz, for example, is preferably not less than 50, more preferably not less than 100, and further preferably not less than 200. As the value of the real number portion of the complex specific inductive capacity is higher, the dielectric material can be made smaller in thickness. For example, in the case of a dielectric material 1 mm in thickness, it is preferable that when the value of the real number portion is not more than 200, tan δ can be controlled to or below about 1, by the controlling method. More specifically, for example, in the case where carbon nanotube and conductive carbon are used in combination and where the values of the real number portion and the imaginary number portion of the complex specific inductive capacity of the dielectric material are controlled through the total blending quantity and the blending ratio of these carbon material so as to obtain a dielectric material suitable for use in a mobile phone, the total blending quantity of the carbon nanotube and the conductive carbon is preferably not less than 10 parts by weight per 100 parts by weight of a polymeric compound, and the blending ratio of the carbon nanotube based on the total blending quantity of the carbon nanotube and the conductive carbon is preferably not more than 50 wt.%. Besides, for example, in the case where true spherical graphite and a conductive carbon are used in combination and where the values of the real number portion and the imaginary number portion of the complex specific inductive capacity of the dielectric material are controlled through the total blending quantity and the blending ratio of the two carbon materials so as to obtain a dielectric material suitable for use in like above mobile phone, the total blending quantity of the true spherical graphite and the conductive carbon is preferably not less than 75 parts by weight per 100 parts by weight of a polymeric compound, and the blending ratio of the conductive carbon based on the total blending quantity of the true spherical graphite and the conductive carbon is preferably not less than 2 wt.%.

In the present invention, the total blending quantity of the carbon materials in the polymer base material is not particularly limited, and can be appropriately selected according to the desired dielectric constant. The total blending quantity of the carbon materials is very small where it is desired to obtain a low dielectric constant (specific inductive capacity= εᵣ), and the total blending quantity is large where it is desired to obtain a high dielectric constant. It is to be noted here, however, that processability may be spoiled if the proportion of the polymeric compound in the polymer base material is too small. If the total blending quantity of the carbon materials based on the blending quantity of the polymeric compound is too large, processability may be spoiled, though a high dielectric constant can be obtained. Taking these points into consideration, the proportion of the polymeric compound is preferably not less than 30 wt.%, more preferably in the range of 30 to 97 wt.%, based on the whole weight of the dielectric material. The blending quantity of the conductive carbon is preferably not more than 20 parts by weight, more preferably in the range of 1 to 20 parts by weight per 100 parts by weight of the polymeric compound, and is preferably in the range of 1 to 20 wt.% based on the whole weight of the dielectric material. The blending quantity of the carbon selected among spherical carbon, flat carbon and carbon fiber of an aspect ratio of not more than 11 is preferably not more than 300 parts by weight, more preferably in the range of 2 to 300 parts by weight per 100 parts by weight of the polymeric compound, and is preferably in the range of 2 to 70 wt.% based on the whole weight of the dielectric material. Furthermore, in the case of carbon nanotube, the blending quantity of the carbon nanotube is preferably not more than 10 parts by weight, more preferably in the range of 1 to 5 parts by weight per 100 parts by weight of the polymeric compound, and is preferably in the range of 1 to 5 wt.% based on the whole weight of the dielectric material.

Now, the dielectric material according to the present invention will be described below. The dielectric material according to the present invention is a dielectric material including a polymer base material and, blended therein, a carbon selected among spherical carbon, flat carbon, carbon nanotube and carbon fiber of an aspect ratio of not more than 11 in combination with a conductive carbon of a developed structure, wherein the polymer base material, the carbon, and the conductive carbon are as above-described. Other than the polymer base material, the carbon and the conductive carbon, the dielectric material in the present invention may be admixed, for example, with metal (aluminium, silver or the like), metal oxide (zinc oxide, magnesium oxide, titanium oxide or the like), metal hydroxide (aluminum hydroxide, calcium hydroxide or the like), or the like. Addition of these materials imparts thermal conductivity and/or flame resistance to the dielectric material. Further, for example, a foaming agent may also be added. Addition of a foaming agent makes it possible to obtain a lighter blank material. Examples of the foaming agent which can be used include volatile-type foaming agents such as carbon dioxide gas, ammonium gas, etc., decomposition-type foaming agents such as azodicarbon diamide, dinitrosopentamethylene tetramine, etc., organic balloons, inorganic balloons, and so on. In consideration of uniformity and stability of the blank material, use of inflated organic balloons or inflated inorganic balloons is preferred. Where the inflated organic balloons or inorganic balloons are added, the addition amount is not particularly limited, and can be appropriately selected according to the desired specific gravity, for example. Taking processability and the strength of the molded product into account, however, it is preferable to add organic balloons in a quantity of not more than 5 parts by weight, more preferably in the range of 1 to 5 parts by weight, per 100 parts by weight of the polymeric compound. In the case of inorganic balloons, the addition amount is preferably not more than 25 parts by weight, more preferably in the range of 5 to 25 parts by weight. Naturally, the organic balloons and the inorganic balloons may be used in combination. Incidentally, vulcanization of the silicone rubber may naturally be conducted not only by use of an organic peroxide but also by a vulcanizing method based on the utilization of radiation or an addition reaction. Particularly in the vulcanizing method utilizing an addition reaction, there may be added small amounts of hydrogenpolysiloxane as a cross-linking agent, a platinum complex as a catalyst, and methylvihylcyclotetrasiloxane, acetylene, alcohol or the like as a reaction inhibitor, whereby a good molded product can be obtained, and a molded product can be obtained even at low temperatures. Besides, as above-mentioned, silicone polymers are in general commercialized in the state of being filled with silica, and such silicone compounds can also be used suitably.

The dielectric material in the present invention can be molded by a general molding method for polymer materials, after adding a curing agent and the carbons and, if necessary, other ingredients to the polymeric compound serving as a raw material component of the polymer base material and mixing the admixture by use of rolls, a kneader or the like. Examples of the general molding method include model moldings such as press molding, injection molding, blow molding, transfer molding, etc., and moldings such as extrusion molding, calendar molding, etc. Where the material is liquid, such methods as potting, casting, screen printing, etc. may be adopted.

As above-described, the dielectric material in the present invention includes a polymer base material and, blended therein, a carbon selected from among spherical carbon, flat carbon, carbon nanotube and carbon fiber of an aspect ratio of not more than 11 in combination with a conductive carbon of a developed structure; therefore, in the same manner as in the controlling method according to the present invention, the values of the real number portion and the imaginary number portion of the complex specific inductive capacity of the dielectric material can be controlled. Besides, according to the dielectric material in the present invention, it is possible to obtain a dielectric material wherein the real number portion value (εᵣ') and the imaginary number portion value (εᵣ") of the complex specific inductive capacity at 0.9 GHz are controlled to arbitrary values, for example, in the range of εᵣ' = 3 to 1300 and the range of εᵣ"=0.2 to 1300. Particularly, in the case where the dielectric material according to the present invention is used as a blank material for a human phantom model, it is possible to control to have, for example, an arbitrary value of the imaginary number portion in range of about 0.2 to 100 without considerably varying the value of the real number portion in the range of about 1 to 100, at 0.9 GHz and to obtain a dielectric material so controlled to have, for example, a dielectric loss (tan δ)=0.1 to 1. Therefore, it is possible to obtain a dielectric material having a dielectric constant of 5 to 83 (at 2.1 GHz), which is close to the specific inductive capacity (εᵣ) of an actual human body tissue, and it is also possible to obtain a dielectric material having a dielectric constant according, for example, to a human head or the like.

The mobile phone according to the present invention is a mobile phone in which the above-described dielectric material is mounted as an electromagnetic wave control member. For example, the dielectric material molded into a sheet-like shape is disposed in the mobile phone at a position between a human head and an antenna through a casing therebetween, in the same manner as in an ordinary mobile phone, whereby the dielectric material can be utilized as an electromagnetic wave control member. Here, as above-mentioned, the dielectric, material according to the present invention includes a polymer base material and, as carbon materials blended therein, a carbon selected among spherical carbon, flat carbon, carbon nanotube and carbon fiber of a low aspect ratio in combination with a conductive carbon. When the total blending quantity of the carbon materials in the polymer base material is increased, the real number portion of the complex specific inductive capacity of the dielectric material is increased, and when the proportion of the conductive carbon in the total blending quantity of the carbon materials is increased, the value of the imaginary number portion of the complex specific inductive capacity is preferentially increased, and a blank material with a high value of dielectric loss (tanδ=εᵣ"/εᵣ') is obtained. Therefore, for example, it is also possible to obtain a dielectric material with a high dielectric constant (preferably, a real number portion value (εᵣ') of complex specific inductive capacity at 0.9 GHz of not less than 300) and a high value of dielectric loss (tanδ) (preferably, a tan δ of not less than 1. 6 at 0.9 GHz in the case of a thickness of 0.5 mm). Accordingly, where the mobile phone according to the present invention is one in which such a dielectric material is mounted as an electromagnetic wave control member, it is possible to obtain a mobile phone in which the influence of electromagnetic waves on the human body is suppressed and which is excellent in antenna efficiency.

The human phantom model according to the present invention is obtained by use of the above-described dielectric material as a blank material. As has been above-mentioned, the complex specific inductive capacity of a human body differs depending on the portion of the human body. However, in the case of the dielectric material according to the present invention, it is possible to obtain a dielectric material in which the values of the real number portion and the imaginary number portion of the complex specific inductive capacity are controlled. For example, as above-mentioned, it is possible to obtain a dielectric material wherein real number portion and imaginary number portion values are controlled to arbitrary values in the range of εᵣ'=3 to 1300 and the range of ε ᵣ"=0.2 to 1300 at 0.9 GHz. Therefore, in the case where the dielectric material according to the present invention is used as a blank material for a human phantom model, it is possible to obtain a human phantom model conforming to the values of real number portion and imaginary number portion of complex specific inductive capacities of, for example, human head, human fat, human bone, muscles, portions of viscera, etc. Here, the method of manufacturing the human phantom model according to the present invention is hot particularly limited, but adoption of the following molding method is preferred, in view of little dispersions of quality such as complex specific inductive capacities of the molded products, etc.

First, a curing agent and the carbon materials and, if necessary, other ingredients are added to the polymeric compound serving as a raw material ingredient of the polymer base material, the admixture is blended by use of rolls, a kneader or the like, followed by kneading, and the kneaded material is sheeted into, preferably, a 2 to 10 mm sheet-like shape, to obtain a sheet-like material. Where the human phantom model is a phantom model of a human head, the shapes of left and right halves of the human head are engraved in mold metal to obtain lower molds, whereby molds for the left and right halves of the human head are prepared. Alternately, molds for upper and lower halves of the human head may be prepared. A method of setting the materials into the mold may include sequentially laying up the sheet-like materials along the curved surface of the mold. When the charging method of charging the mold with the molding material by sequentially laying up the sheet-like materials in the mold is adopted, the material flows little inside the mold, and it is easy to make uniform the properties of the molded product, which is preferable. The left and right preformed materials thus obtained are mated to each other so as to assume the shape of the human head before mold pressing, and pressure and heat are applied thereto. Incidentally, depending on the individual cases, left and right halves or upper and lower halves may be molded, and the molded bodies may be adhered to each other with an adhesive. In addition, in order to secure ease of processing and to suppress dispersions of dielectric constant, other methods than the molding method of using the molds for the left and right halves of the human head may be adopted. For example, a method may be adopted in which molded bodies corresponding to slices of the head are prepared, and the slice-like molded bodies are sequentially laid up while being adhered to each other with an adhesive. Or, a method may be adopted in which, for example, cylindrical or prismatic molded bodies are prepared by use of molds having diameters greater than the maximum diameter of the slices so as to include the slices, in consideration of the sliced shapes of the shape of a human.head, or truncated cone-like or truncated pyramid-like molded bodies are prepared by use of molds having diameters greater than the diameters of the corresponding portions of the slices, then the molded bodies are cut to the sliced shapes of the human head, and the thus cut molded bodies are sequentially laid up while being adhered with an adhesive. By such a method, also, a human head phantom model after the shape of the human head can be obtained. The adhesive in that case may be any of commercially available adhesives such as Cemedine Super X and a heat-curable silicone adhesive (e.g., KE1831, a product by Shin-Etsu Chemical Co., Ltd. or the like), or the like. Alternatively, the blank material used at the time of molding may be dissolved in a solvent, and the resulting product may be used as the adhesive.

The mold pressing is preferably carried out by a method in which a press equipped with an evacuation device is used, the pressure is reduced preferably to or below -90 kPa, more preferably to or below -93 kPa, and then heat and pressure are applied. Incidentally, the vacuum (reduced-pressure) condition is preferably kept during when heat and pressure are applied. As for the molding temperature, it is preferable to raise the temperature stepwise. For example, in the case where the temperature at the time of charging the mold with the material is around room temperature, for example 25°C, the temperature is preferably raised to 70 to 100°C at a rate of 1 to 20°C/min, and compressing is preferably conducted by applying a pressure of 50 to 100 kgf**/**cm² for 30 min to 1 hr by use of a 200 to 400 ton press. Thereafter, the temperature is raised at the same rate preferably to 150 to 180°C, and then heating and compressing are further continued preferably for 1 to 5 hr. Then, at the time of demolding, the molded product is cooled while keeping the compression condition, and when the temperature is lowered preferably to 25 to 50°C, the compressing is stopped, and the molded product is taken out of the mold, to obtain a human head phantom model. Incidentally, the phantom model molding method just described is merely an example, and the molding method for the phantom model in the present invention is not limited to the jut-mentioned method.

### Examples

Now, the present invention will be specifically described below by showing Examples and Comparative Examples, but the present invention is not to be limited to the following examples.

### [Examples 1 to 6]

A true spherical graphite (MCMB(10-28), a product by Osaka Gas Chemicals Co., Ltd.) as a carbon and a conductive carbon (Ketchen Black EC600JD, a product by Lion Corp., having a DBP absorption measured according to ASTM D 2414-79 of 495 cm³/100 g and a BET specific surface area of 1270 m²/g, the same applies hereinafter) were added to 100 parts by weight of a silicone rubber (DY32-152U, a product by Dow Corning Toray Co., Ltd.) in proportions as given in Table 1 below. As a cross-linking agent, 1 part by weight of 2,5-dimethyl-2,5-(t-butyl)dihexane (RC-4(50P), a product by Dow Corning Toray Co., Ltd.) was added. Blending was conducted by use of open rolls, and the blends were heat cured under the conditions of 170°C and 200 kgf/cm² for 10 min, to obtain 40×40×10 (mm) molded products (dielectric materials of Examples 1 to 6). For these dielectric materials of Examples 1 to 6, dielectric constant was measured by use of a vector network analyzer (8720ES, a product by Agilent Technologies) and a dielectric material probe set (85070C, a product by Agilent Technologies). The measurement results (real number portion value εᵣ' and imaginary number portion value εᵣ") of complex specific inductive capacity εᵣ=εᵣ'-j εᵣ" of each of the dielectric material at 900 MHz are also given in Table 1. In addition, for each of the dielectric materials, SAR alternate value change rate was determined according to the method described in Patent Document 1 above. In this case, the specimen had a size of 40×110 (min) and 0.5 mm in thickness. The results are also given in Table 1.

**[Table 1]**

| | Ex. 1 | Ex. 2 | Ex. 3 | Ex. 4 | Ex. 5 | Ex. 6 |
|---|---|---|---|---|---|---|
| True spherical graphite (parts by weight) | 50 | 100 | 150 | 150 | 170 | 200 |
| Conductive carbon (parts by weight) | 15 | 10 | 3 | 5 | 10 | 10 |
| Total blending quantity of carbon materials (parts by weight) | 65 | 110 | 153 | 155 | 180 | 210 |
| Conductive carbon/total of carbon materials (wt.%) | 23.1 | 9.0 | 2.0 | 3.2 | 5.6 | 4.8 |
| Real number portion value of complex specific inductive capacity | 502 | 378 | 143 | 238 | 950 | 1240 |
| Imaginary number portion value of complex specific inductive capacity | 1213 | 649 | 135 | 278 | 985 | 740 |
| SAR alternate value change rate (%) | -90 | -92 | -56 | -50 | -91 | -88 |
| Dielectric loss tanδ = εᵣ"/εᵣ' | 2.416 | 1.717 | 0.944 | 1.168 | 1.037 | 0.597 |

From the results given in Table 1, it is considered that the area of contact of the polymeric compound present between the conductive carbon and the carbon or between the carbon and the carbon is changed at a boundary where the total blending quantity of the carbon materials per 100 parts by weight of the polymeric compound is about 150 parts by weight. In general, it is said that the migration of electric charges occurs along chain-like connections composed of particles of a conductive material and that direct electrical contact exists between the particles. In a theory of electrical contact, it is considered that the contact includes not only the case where the particles of a conductor make direct contact with each other but also the distances within a range over which the tunnel effect applies. Besides, in another view, it is insisted that the conduction mechanism between the conductor and the binder polymer is due to heat radiation of electrons between particles. In view of these points, it is considered that where the total blending quantity of the carbon materials is up to about 150 parts by weight, the polymer functions as a binder and the carbon particles are connected by the polymer, whereas where the total blending quantity of the carbon materials is over about 150 parts by weight, voids may be generated and the value of the imaginary number portion of the complex specific inductive capacity is thereby lowered. It is to be noted, however, that the value of the real number portion is considered to increase gradually. According to this thought, in order to raise the value of the real number portion, it is necessary to enhance the blending quantity of the carbon materials, and, in order to raise the imaginary number portion, it is necessary to secure conduction paths or to prevent the generation of voids between the polymer and the carbon. It is seen that, where the total blending quantity exceeds about 150 parts by weight, voids are liable to be generated, and the rate of contribution of the conductive carbon to enhancement of tan δ is lowered.

### [Comparative Examples 1 to 4]

A true spherical graphite (MCMB(10-28), a product by Osaka Gas Chemicals Co., Ltd.) as a carbon was added to 100 parts by weight of a silicone rubber (DY32-152U, a product by Dow Corning Toray Co., Ltd.) in proportions as given in Table 2 below. As a cross-linking agent, 1 part by weight of 2,5-dimethyl-2,5-(t-butyl)dihexane (RC-4(50P), a product by Dow Corning Toray Co., Ltd.) was added. Blending was conducted by use of open rolls, and the blends were heat cured under the conditions of 170°C and 200 kgf/cm² for 10 min, to obtain 40×40×10 (mm) molded products (dielectric materials of Comparative Examples 1 to 4). For these dielectric materials of Comparative Examples 1 to 4, the values of real number portion and imaginary number portion of complex specific inductive capacity and SAR alternate value change rate were determined in the same manner as in Examples above. The SAR alternate value change rate was measured by use of specimens having a size of 40×110 mm and 0.5 mm in thickness. The results are also given in Table 2.

**[Table 2]**

| | Comp. Ex. 1 | Comp. Ex. 2 | Comp. Ex. 3 | Comp. Ex. 4 |
|---|---|---|---|---|
| True spherical graphite (parts by weight) | 100 | 150 | 170 | 200 |
| Real number portion value of complex specific inductive capacity | 26 | 38 | 61 | 117 |
| Imaginary number portion value of complex specific inductive capacity | 18 | 27 | 73 | 112 |
| SAR alternate value change rate (%) | -20 | -38 | -50 | -63 |

### [Comparative Examples 5 to 8]

A conductive carbon (Ketchen Black EC600JD, a product by Lion Corp.) was added to 100 parts by weight of a silicone rubber (DY32-152U, a product by Dow Corning Toray Co., Ltd.) in proportions as given in Table 3 below. As a cross-linking agent, 1 part by weight of 2,5-dimethyl-2,5-(t-butyl)dihexane (RC-4(50P), a product by Dow Corning Toray Co., Ltd.) was added. Blending was conducted by use of open rolls, and the blends were heat cured under the conditions of 170°C and 200 kgf/cm² for 10 min, to obtain 40 ×40×10 (mm) molded products (dielectric materials of Comparative Examples 5 to 8). For these dielectric materials of Comparative Examples 5 to 8, the values of real number portion and imaginary number portion of complex specific inductive capacity and SAR alternate value change rate were determined in the same manner as in Examples above. The SAR alternate value change rate was measured by use of specimens having a size of 40×110 mm and 0.5 mm in thickness. The results are also given in Table 3.

**[Table 3]**

| | Comp. Ex. 5 | Comp. Ex. 6 | Comp. Ex. 7 | Comp. Ex. 8 |
|---|---|---|---|---|
| Conductive carbon (parts by weight) | 5 | 10 | 15 | 20 |
| Real number portion value of complex specific inductive capacity | 9 | 22 | 55 | 148 |
| Imaginary number portion Value of complex specific inductive capacity | 2 | 19 | 32 | 47 |
| SAR alternate value change rate (%) | -20 | -38 | -50 | -63 |

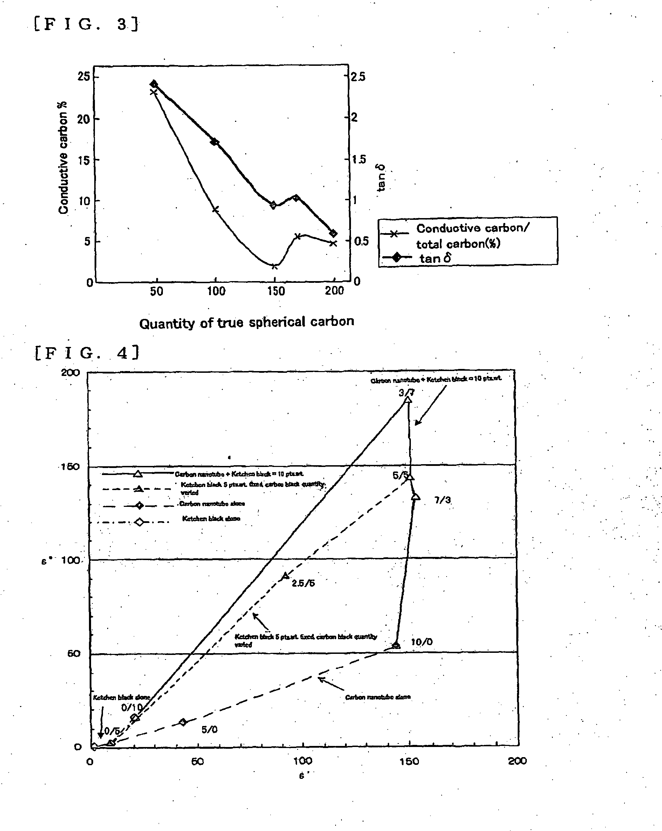

The measurement results of the complex specific inductive capacity, for the dielectric materials of Examples 1 to 6 and Comparative Examples 1 to 8, are shown in the graph in FIG. 1. From the graph in FIG. 1, it is recognized that when the true spherical carbon is used alone, only the dielectric constants in the broken-line region including the round symbols are obtained, and that when the conductive carbon is used alone, only the dielectric constants in the broken-line region including the triangular symbols are obtained, but that when the two kinds of fillers (carbon materials) are used in combination, dielectric materials having dielectric constants (the values of real number portion and imaginary number portion of complex specific inductive capacity) in the by far broader region surrounded by solid lines and including the rhombic symbols are obtained. In addition, a graph showing the relationship between the blending ratio (wt.%) of the conductive carbon based on the whole quantity of carbon materials and the dielectric loss (tan δ), for the dielectric materials of Examples 1 to 5, is shown in FIG. 2. From the graph in FIG. 2, it is seen that the dielectric loss tends to increase as the blending ratio of the conductive carbon based on the whole quantity of carbon materials is increased. Further, a graph showing (1) the relationship between the blending quantity (parts by weight) of the true spherical graphite per 100 parts by weight of the silicone rubber and the dielectric loss (tan δ) and (2) the relationship between the blending quantity (parts by weight) of the true spherical graphite per 100 parts by weight of the silicone rubber and the blending ratio (wt.%) of the conductive carbon based on the whole quantity of carbon materials, for the dielectric materials of Examples 1 to 3, 5 and 6, is shown in FIG. 3. It is recognized from the graph in FIG. 3 that the dielectric loss tends to decrease as the blending quantity of the true spherical graphite per 100 parts by weight of the silicone rubber is increased. In addition, it is seen that where the blending quantity of the true spherical graphite per 100 parts by weight of the silicone rubber is in the range of 50 to 150 parts by weight, the dielectric loss tends to increase as the blending ratio of the conductive carbon based on the whole quantity of carbon materials is increased. Furthermore, it is recognized that where the blending quantity of the true spherical graphite per 100 parts by weight of the silicone rubber is in the range of 150 to 200 parts by weight, the dielectric loss tends to be lower as compared with that in the case of the previous smaller blending quantity, even if the blending ratio of the conductive carbon is increased.

### [Comparative Examples 9, 10]

Graphite fibers having an aspect ratio of about 50 (SG244, a product by Donac Co., Ltd.) as a carbon and a conductive carbon (Ketchen Black EC600JD, a product by Lion Corp.) were added to 100 parts by weight of a silicone rubber (DY32-152U, a product by Dow Corning Toray Co., Ltd.) in proportions as given in Table 4. As a cross-linking agent, 1 part by weight of 2,5-dimethyl-2,5-(t-butyl)dihexane (RC-4(50P), a product by Dow Corning Toray Co., Ltd.) was added. Blending was conducted by use of open rolls, and the blends were heat cured under the conditions of 170°C and 200 kgf/cm² for 10 min, to obtain 40×40×10 (mm) molded products (dielectric materials of Comparative Examples 9, 10). For these dielectric materials of Comparative Examples 9, 10 and Example 4 above, dielectric constant was measured by use of a vector network analyzer (8720ES, a product by Agilent Technologies) and a dielectric material probe set (85070C, a product by Agilent Technologies). The measurement was repeated five times for each sample. For the dielectric materials, the measurement results of complex specific inductive capacity (the values of real number portion and imaginary number portion) at 900 MHz and the dispersion thereof are also given in Table 4.

**[Table 4]**

| | Ex. 4 | Comp. Ex. 9 | Comp. Ex. 10 |
|---|---|---|---|
| True spherical carbon (parts by weight) | 150 | 0 | 0 |
| Graphite fiber (parts by weight) | 0 | 20 | 20 |
| Conductive carbon (parts by weight) | 5 | 0 | 5 |
| Real number portion value of complex specific inductive capacity | 238 | 23 | 63 |
| Imaginary number portion value of complex specific conductive capacity | 278 | 4.6 | 25 |
| Dispersion of dielectric constant measurements (n=5) relative to average of measurements | | | |
| Dispersion of real number portion value of complex specific inductive capacity | ± 3% | ± 13% | ± 16% |
| Dispersion of imaginary number portion value of complex specific inductive capacity | ± 0.04% | ± 49% | ± 32% |

From the results given in Table 4, it is recognized that when the true spherical graphite is used, the dispersion of the measurement results upon repetition of measurement is smaller and very stable characteristics can be obtained, as compared with the case where the graphite fibers with an aspect ratio of about 50 are used. Such characteristics are considered to be owing to the effect of the absence of shape anisotropy in the true spherical graphite.

### [Examples 7 to 10 and Comparative Examples 11 to 15]

Carbon nanotubes (MWNT, a product by Bussan Nanotech Research Institue Inc.) and a conductive carbon (Ketchen Black EC600JD, a product by Lion Corp.) were added to 100 parts by weight of a silicone rubber (SH-851-U, a product by Dow Corning Toray Co., Ltd.) in proportions as given in Table 5. As a cross-linking agent, 1 part by weight of 2,5-dimethyl-2,5-(t-butyl)dihexane (RC-4(50P), a product by Dow Corning Toray Co., Ltd.) was added, and, as a processing assistant, 1 part by weight of Alphaflex 101 (product name, a product by Alphaflex Industries) was added. Blending was conducted by use of open rolls, and the blends were heat cured under the conditions of 170°C and 200 kgf/cm² for 10 min, to obtain 40×40×10 (mm) molded products (dielectric materials of Examples 9 to 10 and Comparative Examples 11 to 15). For these dielectric materials, dielectric constant at 900 MHz was measured by use of a vector network analyzer (8720ES, a product by Agilent Technologies) and a dielectric material probe set (85070C, a product by Agilent Technologies). The results are also given in Table 5.

**[Table 5]**

| | Comp. Ex. | | | | | Examples | | | |
|---|---|---|---|---|---|---|---|---|---|
| | 11 | 12 | 13 | 14 | 15 | 7 | 8 | 9 | 10 |
| Silicone rubber (parts by weight) | 100 | 100 | 100 | 100 | 100 | 100 | 100 | 100 | 100 |
| Alphaflex 101 (parts by weight) | 1.0 | 1.0 | 1.0 | 1.0 | 1.0 | 1.0 | 1.0 | 1.0 | 1.0 |
| RC-4(50P) (parts by weight) | 1.0 | 1.0 | 1.0 | 1.0 | 1.0 | 1.0 | 1.0 | 1.0 | 1.0 |
| Carbon nanotube (parts by weight) | 0 | 5.0 | 10 | 0 | 0 | 2.5 | 5.0 | 7.0 | 3.0 |
| Ketchen black (parts by weight) | 0 | 0 | 0 | 5.0 | 10 | 5.0 | 5.0 | 3.0 | 7.0 |
| Total quantity of carbon materials (parts by weight) | 0 | 5.0 | 10 | 5.0 | 10 | 7.5 | 10 | 10 | 10 |
| Carbon nanotube/carbon materials (wt.%) | | | | | | 33 | 50 | 70 | 30 |
| Ketchen black/carbon materials (wt.%) | | | | | | 67 | 50 | 30 | 70 |
| Real number portion εᵣ' of complex specific Inductive capacity | 2.3 | 44 | 144 | 10 | 21 | 92 | 151 | 153 | 150 |
| Imaginary number portion εᵣ" of complex specific inductive capacity | 0.2 | 18 | 54 | 2 | 16 | 92 | 144 | 134 | 185 |
| tan δ | 0.087 | 0.409 | 0.375 | 0.2 | 0.762 | 1.000 | 0.954 | 0.876 | 1.233 |

Graphs showing respectively (1) the relationship between the real number portion value and the imaginary number portion value of complex specific inductive capacity in the case where the blending ratio of the carbon nanotubes and Ketchen black is varied so that the total blending quantity of the carbon nanotubes and the Ketchen black is 10 parts by weight per 100 parts by weight of the silicone rubber, (2) the relationship between the real, number portion value and the imaginary number portion value of complex specific inductive capacity in the case where the blending quantity of the carbon nanotubes is changed from 0 part by weight to 2.5 parts by weight and 5 parts by weight while the blending quantity of Ketchen black is fixed at 5 parts by weight per 100 parts by weight of the silicone rubber, (3) the relationship between the real number portion value and the imaginary number portion value of complex specific inductive capacity in the case where the carbon nanotubes are singly blended in varied quantities of 0 part by weight, 5 parts by weight and 10 parts by weight per 100 parts by weight of the silicone rubber, and (4) the relationship between the real number portion value and the imaginary number portion value of complex specific inductive capacity in the case where Ketchen black is singly blended in varied quantifies of 0 part by weight, 5 parts by weight and 10 parts by weight per 100 parts by weight of the silicone rubber, for the dielectric materials, are shown in FIG. 4. Incidentally, in FIG. 4, x/y represents the blending ratio of carbon nanotube weight/Ketchen black weight.

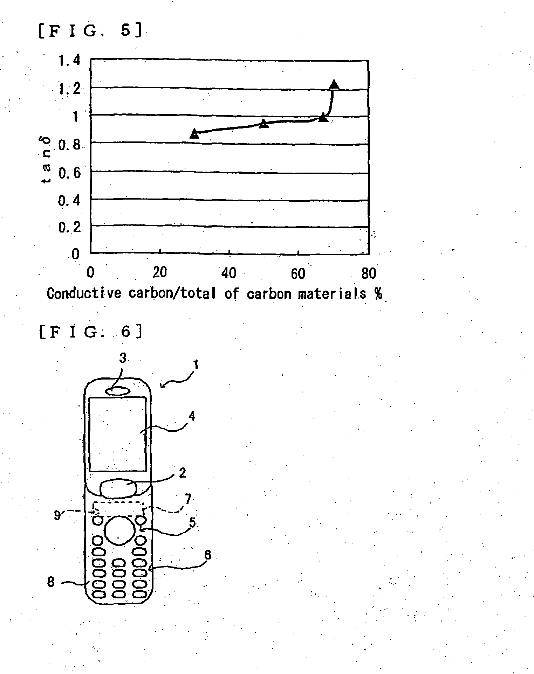

From the results shown in Table 5, it is recognized that both the values of the real number portion and the imaginary number portion increase as the total blending quantity of the carbon materials is increased. It is also recognized that in the case where the total blending quantity of the carbon materials is the same, the value of the real number portion varies little as the blending ratio of the carbon nanotubes and the Ketchen black is varied, whereas the value of the imaginary number portion increases considerably as the blending ratio of the Ketchen black is increased. Here, a graph showing the relationship between the blending ratio (wt.%) of Ketchen black based on the whole quantity of the carbon materials and the dielectric loss (tan δ), for the dielectric materials of Examples 7 to 10, is shown in FIG. 5. It is seen from the graph in FIG. 5 that the dielectric loss tends to increase as the blending ratio of the Ketchen black based on the whole quantity of the carbon materials is increased.

### [Examples 11, 12]

In the next place, for confirming the relationship between the blending quantity of conductive carbon and the dielectric loss (tan δ), a true spherical carbon (MCMB(10-28), a product by Osaka Gas Chemicals Co., Ltd.) and a conductive carbon (Ketchen Black EC600JD, a product by Lion Corp.) were added to 100 parts by weight of a silicone rubber (DY32-152U, a product by Dow Corning Toray Co., Ltd.) in proportions as given in Table 6. As a cross-linking agent, 1 part by weight of 2,5-dimethyl-2,5-(t-butyl)dihexane (RC-4(50P), a product by Dow Corning Toray Co., Ltd.) was added, and, as a processing assistant, 1 part by weight of Alphaflex 101 (product name, a product by Alphaflex Industries) was added. Blending was conducted by use of open rolls, and the blends were heat cured under the conditions of 170°C and 200 kgf/cm² for 10 min, to obtain 40 ×40×10 (mm) molded products (dielectric materials of Examples 11, 12). For these dielectric materials of Examples 11 and 12, dielectric constant was measured by use of a vector network analyzer (8720ES, a product by Agilent Technologies) and a dielectric material probe set (85070C, a product by Agilent Technologies). The results are also given in Table 6.

**[Table 6]**

| | Ex. 11 | Ex. 12 |
|---|---|---|
| DY32-152U (pts.wt.) | 100 | 100 |
| Alphaflex 101(pts.wt.) | 1 | 1 |
| RC-4 (50P) (pts.wt.) | 1 | 1 |
| MCMB (10-28) True spherical carbon (pts.wt.) | 150 | 150 |
| Ketchen black (pts.wt.) | 1 | 3 |
| Total quantity of carbon materials (pts.wt.) | 151 | 153 |
| Ketchen black/total of carbon materials (pts.wt.) | 0.66 | 1.96 |
| Real number portion value of complex specific inductive capacity | | |
| 0.9 GHz | 95 | 126 |
| 1.5 GHz | 68 | 99 |
| 2.1 GHz | 55 | 78 |
| 5.0 GHz | 31 | 48 |
| Imaginary number portion value of complex specific inductive capacity | | |
| 0.9 GHz | 83 | 128 |
| 1.5 GHz | 67 | 99 |
| 2.1 GHz | 57 | 83 |
| 5.0 GHz | 38 | 53 |
| tan *δ* | | |
| 0.9 GHz | 0.874 | 1.016 |
| 1.5 GHz | 0.985 | 1.000 |
| 2.1 GHz | 1.036 | 1.064 |
| 5.0 GHz | 1.226 | 1.104 |

### [Examples 13 to 15]

According to the formulations given in Table 7 below, carbon nanotubes (MWNT, a product by Bussan Nanotech Research Institute Inc.) and a conductive carbon (Ketchen Black EC600JD, a product by Lion Corp., or Denka Black (acetylene black), a product by Denki Kagaku Kogyo KK; having a DBP absorption measured according to ASTM D 2414-79 of 165 cm³/100 g and a BET specific surface area of 65 m²/g; the same applies hereinafter) were added to 100 parts by weight of a silicone rubber (SH-851-U (general millable silicone), a product by Dow Corning Toray Co., Ltd.) or a foaming silicone (X-30-1777-50U, a product by Shin-Etsu Chemical Co., Ltd.) in proportions given in Table 7. As a cross-linking agent, 2,5-dimethyl-2,5-(t-butyl)dihexane (RC-4(50P), a product by Dow Corning Toray Co., Ltd.) was added, and, as processing assistants, Alphaflex 101 (product name, a product by Alphaflex Industries) and a silicone oil (SH-200, a product by Dow Corning Toray Co., Ltd.) were added, in proportions as given in Table 7. Blending was conducted by use of open rolls, and the blends were heat cured under the conditions of 170°C and 200 kgf/cm² for 10 min, to obtain 40×40×10 (mm) molded products (dielectric materials of Examples 13 to 15). For these dielectric materials of Examples 13 to 15, (dielectric constant was measured by use of a vector network analyzer (8720ES, a product by Agilent Technologies) and a dielectric material probe set (85070C, a product by Agilent Technologies). The results are also given in Table 7.

**[Table 7]**

| | Ex. 13 | Ex. 14 | Ex. 15 |
|---|---|---|---|
| SH-851-U (general millable silicone) (pts.wt.) | | | 100 |
| X-30-1777-50U (foaming silicone) (pts.wt.) | 100 | 100 | |
| Alphaflex 101 (processing assistant)(pts.wt.) | 1 | 1 | 1 |
| RC-4(50P) (pts.wt.) | 1.0 | 1.0 | 1.0 |
| Carbon nanotube (pts.wt.) | 2.5 | 2 | 2.5 |
| Silicone oil SH-200 (pts.wt.) | 2.5 | 2 | 2.5 |
| Ketchen black (pts.wt.) | 5.5 | 5 | |
| Denka Black (acetylene black) (pts.wt.) | | | 5 |
| Total quantity of carbon materials (pts.wt.) | 8.0 | 7.0 | 7.5 |
| Carbon nanotube/total of carbon materials (wt.%) | 31 | 29 | 33 |
| Real number portion value of complex specific inductive capacity | | | |
| 0.9 GHz | 69 | 49 | 45 |
| 1.5 GHz | 54 | 41 | 39 |
| 2.1 GHz | 47 | 36 | 35 |
| 5.0 GHz | 33 | 27 | 28 |
| Imaginary number portion value of complex specific inductive capacity | | | |
| 0.9 GHz | 74 | 49 | 29 |
| 1.5 GHz | 53 | 35 | 22 |
| 2.1 GHz | 47 | 29 | 19 |
| 5.0 GHz | 25 | 18 | 13 |
| tan δ | | | |
| 0.9 GHz | 1.072 | 1.000 | 0.644 |
| 1.5 GHz | 0.981 | 0.853 | 0.564 |
| 2.1 GHz | 1.000 | 0.806 | 0.543 |
| 5.0 GHz | 0.758 | 0.667 | 0.464 |

Incidentally, the dielectric materials of Examples 13 to 15 above can be suitably used as blank materials for human head phantom models. The dielectric material of Example 13 can be suitably used for a 2.1 GHz high-dielectric-loss phantom, the dielectric material of Example 14 for a 900 MHz high-dielectric-loss phantom, and the dielectric material of Example 15 for a 900 MHz general phantom (the dielectric loss is equivalent to that of the human body).

### [Examples 16, 17]

According to the formulations given in Table 8 below, a true spherical graphite (MCMB10-28, a product by Osaka Gas Chemicals Co., Ltd.) and a conductive carbon (Ketchen Black EC600JD, a product by Lion Corp.) were added to 100 parts by weight of a silicone rubber (DY32-152U, a product by Dow Corning Toray Co., Ltd.) in proportions as given in Table 8. As a cross-linking agent (peroxide vulcanizing agent), 2.,5-dimethyl-2,5-(t-butyl)dihexane (RC-4(50P), a product by Dow Corning Toray Co., Ltd.) was added, and, as a processing assistant, Alphaflex 101 (product name, a product by Alphaflex Industries) were added in proportions as given in Table 8. Blending was conducted by use of open rolls, and the blends were heat cured under the conditions of 170°C and 200 kgf/cm² for 10 min, to obtain 40×40×10 (mm) molded products (dielectric materials of Examples 16, 17). For these dielectric materials of Examples 16 and 17, dielectric constant was measured by use of a vector network analyzer (8720ES, a product by Agilent Technologies) and a dielectric material probe set (85070C, a product by Agilent Technologies). The results are also given in Table 8.

**[Table 8]**

| Blending materials | Ex. 16 | Ex. 17 |
|---|---|---|
| Silicone rubber Y32-152U (pts.wt.) | 100 | 100 |
| Processing assistant Alphaflex 101 (pts.wt.) | 1.0 | 1.0 |
| Peroxide vulcanizing agent RC-4(50P) (pts.wt.) | 1.0 | 1.0 |
| True spherical graphite MCMB 10-28(pts.wt.) | 30 | 100 |
| Ketchen black EC600JD (pts.wt.) | 3.0 | 1.0 |
| Total quantity of carbon materials (pts.wt.) | 33.0 | 101.0 |
| Ketchen black/total of carbon materials (wt.%) | 9.09 | 0.99 |
| Real number portion value of complex specific inductive capacity | | |
| 1.9 GHz | 9.4 | 16.2 |
| Imaginary number portion value of complex specific inductive capacity | | |
| 1.9 GHz | 2.4 | 6.0 |
| tan δ | 0.255 | 0.370 |

Incidentally, the dielectric materials of Examples 16 and 17 above can be suitably used as blank materials for human phantom models. The dielectric material of Example 16 is set to conform to the human fat (specific inductive capacity εᵣ≒9.38), and the dielectric material of Example 17 is set to conform to the human bone (specific inductive capacity εᵣ≒16).

### [Example 18]

According to the formulation given in Table 9 below, a scaly graphite (a scaly graphite powder of an average particle diameter of 20 µm, obtained by baking a 50 µm thick polyimide film at 260°C to prepare a sheet-like graphite, then cutting it by a pair of scissors to about 5 mm pieces, and processing the pieces by a jet milling method; the same as the graphite used in Patent Document 2) and a conductive carbon (Ketchen Black EC600JD, a product by Lion Corp.) were added to 100 parts by weight of a silicone rubber (DY32-152U, a product by Dow Corning Toray Co., Ltd.) in proportions given in Table 9. As a cross-linking agent, 2,5-dimethyl-2,5-(t-butyl)dihexane (RC-4(50P), a product by Dow Corning Toray Co., Ltd.) was added, and, as processing assistants, Alphaflex 101 (product name, a product by Alphaflex Industries) and a silicone oil (SH-200, a product by Dow Corning Toray Co., Ltd.) were added, in proportions as given in Table 9. Blending was conducted by use of open rolls, and the blends were heat cured under the conditions of 170°C and 200 kgf/cm² for 10 min, to obtain a 40×40×10 (mm) molded product (dielectric material of Example 18). For the dielectric material of Examples 18, dielectric constant was measured by use of a vector network analyzer (8720ES, a product by Agilent Technologies) and a dielectric material probe set (85070C, a product by Agilent Technologies). The results are also given in Table 9.

**[Table 9]**

| | Example 18 |
|---|---|
| Silicone rubber DY32-152U (pts.wt.) | 100 |
| Processing assistant Alphaflex 101 (pts.wt.) | 1.0 |
| Peroxide vulcanizing agent RC-4(50P) (pts.wt.) | 1.0 |
| Silicone oil SH-200 50cs (pts.wt.) | 10 |
| Scaly graphite (pts.wt.) | 50 |
| Ketchen black (pts.wt.) | 10 |
| Total quantity of carbon materials (pts.wt.) | 60 |
| Ketchen black/total of carbon materials (pts.wt.) | 16 |
| Real number portion value of complex specific inductive capacity (0.9 GHz) | 68 |
| Imaginary number portion value of complex specific inductive capacity (0.9 GHz) | 60 |
| tan δ | 0.882 |

### [Example 19]

In the next place, a configuration example of the mobile phone according to the present invention (Example 19) will be described below, referring to FIG. 6. FIG. 6 is a schematic top plan view showing the condition where the mobile phone 1 according to a configuration example of the present invention is opened. The mobile phone 1 is foldable at a hinge part 2 equipped also with a rotating mechanism, and is used in the opened state at the time of talking. In the figure, numeral 3 denotes an earpiece, 4 denotes a display unit, 5 denotes a menu operating unit, 6 denotes a dial operating unit, 7 denotes a dielectric material, 8 denotes a mobile phone casing. An incorporated type antenna 9 is mounted in the mobile phone casing 8. The dielectric material 7 has dimensions (longitudinal and crosswise) comparable to those of the incorporated type antenna 9, and is disposed in the mobile phone casing 8 on the front side of the incorporated type antenna 9, i.e., it is so disposed that the dielectric material 7 is located on the human body side when the mobile phone 1 is used. As the dielectric material 7 in the mobile phone 1, for example, a dielectric material 5 mm long, 30 mm wide and 0.5 mm thick and having a composition similar to those of the dielectric materials of Examples 1 to 6 above may be mounted in the mobile phone casing so as to be located on the display unit side (on the human body side in use) of the incorporated type antenna 9, whereby SAR value can be reduced sufficiently, and a mobile phone enhanced in radiation efficiency of antenna can be obtained.

### [Example 20]

Next, a configuration example of the human phantom model according to the present invention (Example 20) will be described. The raw material ingredients of Example 13 above were kneaded by open rolls, and the kneaded material was sheeted into a 5 mm sheet-like shape, in the same manner as in Example 1. Molds modeled after the shapes of left and right halves of a human head were prepared, and, at a temperature of 25°C, the sheet-like materials were sequentially laid up along the inside surfaces of the molds as above-mentioned, to fill the molds. Before mold pressing, the molds for the left and right halves were mated with each other. The mold pressing was conducted by evacuating the mold to a pressure of 5 torr, and then heat and pressure were applied, by use of a press equipped with an evacuation device. The molding was conducted by raising the temperature to 170°C at a rate of about 2°C/min under an applied pressure of 200 kgf/cm² by use of a 200 ton press, and, after the temperature reached 170°C, heating and compressing were continued for a further period of 5 hr. Thereafter, the molded product was cooled while kept in the compressed state, then, the compressing was stopped when the temperature was lowered to about 50°C, and the product was demolded, to obtain a human head phantom model. The complex specific inductive capacity of the human head phantom model at 2.1 GHz had a real number portion value of 47, an imaginary number portion value of 47, and a tan δ of 1; thus, a human head phantom model having a specific inductive capacity and a dielectric loss equal to those of the human head was obtained.

### Industrial Applicability

The present invention can be utilized in the communication fields. Specifically, the invention can be utilized, for example, for reducing the influence of a mobile phone on the human body, for enhancing the radiation efficiency of an antenna, for controlling a radiation pattern, and the like purposes. In addition, the invention can be utilized also for shielding of unnecessary electromagnetic waves coming from an electromagnetic cooker, shielding of unnecessary electromagnetic waves which might otherwise enter into a car navigation unit and prevention of unrequired radiation to the exterior, prevention of misoperations of a vehicle interval radar for ITS automatic operation, prevention of misoperations of PC, and the like purposes. Further, the invention can be utilized also for shielding of irrelevant electromagnetic waves in the casing of a medical inspection apparatus, for example, a pacemaker, prevention of misoperations concerning a non-contact type IC card, and the like. Furthermore, the invention can be utilized also in the fields of transportation means (airplanes, ships, automobiles).

## Claims

1. A method of manufacture of a dielectric material having a specific inductive capacity, the dielectric material having:
a silicone rubber base material;
a carbon material in a proportion of 2 to 70 wt. % based on the whole weight of the dielectric material, selected from among spherical carbon, flat carbon, carbon nanotube and carbon fiber of an aspect ratio of not more than 11, of which carbon material is optionally carbon nanotube in a proportion of 1 to 5 wt. % based on the whole weight of the dielectric material; and, additionally,
a conductive carbon of a developed structure in a proportion of 1 to 20 wt. % based on the whole weight of the dielectric material, said conductive carbon of a developed structure defined in terms of a DBP oil absorption not less than 100 cm³/100g, the DBP oil absorption being measured according to ASTM D 2-414-79,
wherein the carbon material and the conductive carbon of a developed structure are dispersed in the silicone rubber base material in a blend, and the proportion of the silicone rubber base material is in the range of 30 to 97 wt.% based on the whole weight of the dielectric material, **characterised in that**
the value (εr') of the real number portion and the value (εr") of the imaginary number portion of the complex specific inductive capacity of said dielectric material are controlled through the blending quantities of said carbon and said conductive carbon in said silicone rubber base material, such that the value (εr') of the real number portion is in the range 3 to 1300 at 0.9 GHz and the value (εr") of the imaginary number portion is in the range 0.2 to 1300 at 0.9 GHz, and the value of the dielectric loss (tanδ)=εr"/εr' is in the range 0.1 to 2.5 at 0.9 GHz.

2. A method according to claim 1, wherein the conductive carbon of a developed structure has a BET specific surface area not less than 30 m²/g.

3. A method according to claim 1 or claim 2, wherein the value (εr') of the real number portion of the complex specific inductive capacity of the dielectric material is in the range 1 to 100 at 0.9 GHz, the value (εr") of the imaginary number portion of the complex specific inductive capacity of the dielectric material is in the range 0.2 to 100 at 0.9 GHz and the value of the dielectric loss (tanδ)=εr"/εr' is in the range 0.1 to 1 at 0.9 GHz.

4. A method according to any one of claims 1 to 3, wherein the value (εr') of the real number portion of the complex specific inductive capacity of the dielectric material is not less than 100 at 0.9 GHz.

5. A method according to any one of claims 1 to 4, wherein the value (εr') of the real number portion of the complex specific inductive capacity of the dielectric material is not less than 200 at 0.9 GHz.

6. A method according to any one of claims 1 to 5, wherein the value (εr") of the imaginary number portion of the complex specific inductive capacity of the dielectric material is not less than 100 at 0.9 GHz.

7. A method according to any one of claims 1 to 6, wherein the value (εr') of the real number portion of the complex specific inductive capacity of the dielectric material is not less than 300 at 0.9 GHz and the value of the dielectric loss (tanδ)=εr"/εr' is not less than 1.6 at 0.9 GHz.

8. A dielectric material comprising:
a silicone rubber base material;
a carbon material selected among spherical carbon, flat carbon, carbon nanotube and carbon fiber of an aspect ratio of not more than 11 in a proportion of 2 to 70 wt. % based on the whole weight of the dielectric material, of which carbon material is optionally carbon nanotube in a proportion of 1 to 5 wt. % based on the whole weight of the dielectric material; and, additionally,
a conductive carbon of a developed structure in a proportion of 1 to 20 wt. % based on the whole weight of the dielectric material, said conductive carbon of a developed structure being defined in terms of a DBP oil absorption of not less than 100 cm³/100g, the DBP oil absorption being measured according to ASTM D 2414-79,
wherein the carbon material and the conductive carbon of a developed structure are dispersed in the silicone rubber base material in a blend, and the proportion of the silicone rubber base material is in the range 30 to 97 wt.% based on the whole weight of the dielectric material,
**characterised in that**
the value (εr') of the real number portion and the value (εr") of the imaginary number portion of the complex specific inductive capacity of said dielectric material are controlled through the blending quantities of said carbon and said conductive carbon in said silicone rubber base material, such that the value (εr') of the real number portion is in the range 3 to 1300 at 0.9 GHz and the value (εr") of the imaginary number portion is in the range 0.2 to 1300 at 0.9 GHz, and the value of the dielectric loss (tan δ)=εr"/εr' is in the range 0.1 to 2.5 at 0.9 GHz.

9. A dielectric material according to claim 8, wherein the conductive carbon of a developed structure has a BET specific surface area not less than 30 m²/g.

10. A dielectric material according to claim 8 or claim 9, wherein the value (εr') of the real number portion of the complex specific inductive capacity of the dielectric material is in the range 1 to 100 at 0.9 GHz, the value (εr") of the imaginary number portion of the complex specific inductive capacity of the dielectric material is in the range 0.2 to 100 at 0.9 GHz and the value of the dielectric loss (tanδ)=δr"/εr' is in the range 0.1 to 1 at 0.9 GHz.

11. A dielectric material according to any one of claims 8 to 10, wherein the value (εr') of the real number portion of the complex specific inductive capacity of the dielectric material is not less than 100 at 0.9 GHz.

12. A dielectric material according to any one of claims 8 to 11, wherein the value (εr') of the real number portion of the complex specific inductive capacity of the dielectric material is not less than 200 at 0.9 GHz.

13. A dielectric material according to any one of claims 8 to 12, wherein the value (εr") of the imaginary number portion of the complex specific inductive capacity of the dielectric material is not less than 100 at 0.9 GHz.

14. A dielectric material according to any one of claims 8 to 13, wherein the value (εr') of the real number portion of the complex specific inductive capacity of the dielectric material is not less than 300 at 0.9 GHz and the value of the dielectric loss (tanδ)=εr"/εr" is not less than 1.6 at 0.9 GHz.

15. A dielectric material according to any one of claims 8 to 14, wherein said dielectric material is a blank material for a human phantom model.

16. A mobile phone wherein a dielectric material according to any one of claims 8 to 14 is mounted for use as an electromagnetic wave control member.

17. A human phantom model wherein a dielectric material according to any one of claims 8 to 14 is used as a blank material.

## Patentansprüche

1. Verfahren zur Herstellung eines dielektrischen Materials mit einer spezifischen induktiven Kapazität, wobei das dielektrische Material Folgendes aufweist:
ein Siliconkautschuk-Basismaterial;
ein Kohlenstoffmaterial in einem Anteil von 2 bis 70 Gew.-% bezogen auf das Gesamtgewicht des dielektrischen Materials, ausgewählt aus kugelförmigem Kohlenstoff, flachem Kohlenstoff, Kohlenstoff-Nanoröhrchen und Kohlenstofffasern mit einem Seitenverhältnis von nicht mehr als 11, wobei das Kohlenstoffmaterial gegebenenfalls Kohlenstoff-Nanoröhrchen in einem Anteil von 1 bis 5 Gew.-% bezogen auf das Gesamtgewicht des dielektrischen Materials ist; und zusätzlich dazu
einen leitfähigen Kohlenstoff einer entwickelten Struktur in einem Anteil von 1 bis 20 Gew.-% bezogen auf das Gesamtgewicht des dielektrischen Materials, wobei der leitfähige Kohlenstoff einer entwickelten Struktur in Bezug auf eine DBP-Ölabsorption von nicht weniger als 100 cm³/100 g definiert ist, wobei die DBP-Ölabsorption gemäß ASTM D 2414-79 gemessen wird,
worin das Kohlenstoffmaterial und der leitfähige Kohlenstoff einer entwickelten Struktur in dem Siliconkautschuk-Basismaterial in einer Mischung dispergiert sind und der Anteil des Siliconkautschuk-Basismaterials im Bereich von 30 bis 97 Gew.-% bezogen auf das Gesamtgewicht des dielektrischen Materials liegt,
**dadurch gekennzeichnet, dass**
der Wert (εr') des reellen Teils und der Wert (εr") des imaginären Teils der komplexen spezifischen induktiven Kapazität des dielektrischen Materials durch die Mi-schungsmengen des Kohlenstoffs und des leitfähigen Kohlenstoffs in dem Siliconkautschuk-Basismaterial kontrolliert werden, sodass der Wert (εr') des reellen Teils bei 0,9 GHz im Bereich von 3 bis 1300 liegt und der Wert (εr") des imaginären Teils bei 0,9 GHz im Bereich von 0,2 bis 1300 liegt und der Wert des dielektrischen Verlusts (tanδ) = δr"/εr' bei 0,9 GHz im Bereich von 0,1 bis 2,5 liegt.

2. Verfahren nach Anspruch 1, worin der leitfähige Kohlenstoff einer entwickelten Struktur eine spezifische BET-Oberfläche von nicht weniger als 30 m²/g aufweist.

3. Verfahren nach Anspruch 1 oder Anspruch 2, worin der Wert (εr') des reellen Teils der komplexen spezifischen induktiven Kapazität des dielektrischen Materials bei 0,9 GHz im Bereich von 1 bis 100 liegt, der Wert (εr") des imaginären Teils der komplexen spezifischen induktiven Kapazität des dielektrischen Materials bei 0,9 GHz im Bereich von 0,2 bis 100 liegt und der Wert des dielektrischen Verlusts (tanδ) = εr"/εr' bei 0,9 GHz im Bereich von 0,1 bis 1 liegt.

4. Verfahren nach einem der Ansprüche 1 bis 3, worin der Wert (εr') des reellen Teils der komplexen spezifischen induktiven Kapazität des dielektrischen Materials bei 0,9 GHz nicht weniger als 100 beträgt.

5. Verfahren nach einem der Ansprüche 1 bis 4, worin der Wert (εr') des reellen Teils der komplexen spezifischen induktiven Kapazität des dielektrischen Materials bei 0,9 GHz nicht weniger als 200 beträgt.

6. Verfahren nach einem der Ansprüche 1 bis 5, worin der Wert (εr") des imaginären Teils der komplexen spezifischen induktiven Kapazität des dielektrischen Materials bei 0,9 GHz nicht weniger als 100 beträgt.

7. Verfahren nach einem der Ansprüche 1 bis 6, worin der Wert (εr') des reellen Teils der komplexen spezifischen induktiven Kapazität des dielektrischen Materials bei 0,9 GHz nicht weniger als 300 beträgt und der Wert des dielektrischen Verlusts (tanδ) = εr"/εr' bei 0,9 GHz nicht weniger als 1,6 beträgt.

8. Dielektrisches Material, das Folgendes umfasst:
ein Siliconkautschuk-Basismaterial;
ein Kohlenstoffmaterial, ausgewählt aus kugelförmigem Kohlenstoff, flachem Kohlenstoff, Kohlenstoff-Nanoröhrchen und Kohlenstofffasern mit einem Seitenverhältnis von nicht mehr als 11 in einem Anteil von 2 bis 70 Gew.-% bezogen auf das Gesamtgewicht des dielektrischen Materials, wobei das Kohlenstoffmaterial gegebenenfalls Kohlenstoff-Nanoröhrchen in einem Anteil von 1 bis 5 Gew.-% bezogen auf das Gesamtgewicht des dielektrischen Materials ist; und zusätzlich dazu
einen leitfähigen Kohlenstoff einer entwickelten Struktur in einem Anteil von 1 bis 20 Gew.-% bezogen auf das Gesamtgewicht des dielektrischen Materials, wobei der leitfähige Kohlenstoff einer entwickelten Struktur in Bezug auf eine DBP-Ölabsorption von nicht weniger als 100 cm³/100 g definiert ist, wobei die DBP-Ölabsorption gemäß ASTM D 2414-79 gemessen wird,
worin das Kohlenstoffmaterial und der leitfähige Kohlenstoff einer entwickelten Struktur in dem Siliconkautschuk-Basismaterial in einer Mischung dispergiert sind und der Anteil des Siliconkautschuk-Basismaterials im Bereich von 30 bis 97 Gew.-% bezogen auf das Gesamtgewicht des dielektrischen Materials liegt,
**dadurch gekennzeichnet, dass**
der Wert (εr') des reellen Teils und der Wert (εr") des imaginären Teils der komplexen spezifischen induktiven Kapazität des dielektrischen Materials durch die Mischungsmengen des Kohlenstoffs und des leitfähigen Kohlenstoffs in dem Siliconkautschuk-Basismaterial kontrolliert werden, sodass der Wert (εr') des reellen Teils bei 0,9 GHz im Bereich von 3 bis 1300 liegt und der Wert (εr") des imaginären Teils bei 0,9 GHz im Bereich von 0,2 bis 1300 liegt und der Wert des dielektrischen Verlusts (tanδ) = εr"/εr' bei 0,9 GHz im Bereich von 0,1 bis 2,5 liegt.

9. Dielektrisches Material nach Anspruch 8, worin der leitfähige Kohlenstoff einer entwickelten Struktur eine spezifische BET-Oberfläche von nicht weniger als 30 m²/g aufweist.

10. Dielektrisches Material nach Anspruch 8 oder Anspruch 9, worin der Wert (εr') des reellen Teils der komplexen spezifischen induktiven Kapazität des dielektrischen Materials bei 0,9 GHz im Bereich von 1 bis 100 liegt, der Wert (εr") des imaginären Teils der komplexen spezifischen induktiven Kapazität des dielektrischen Materials bei 0,9 GHz im Bereich von 0,2 bis 100 liegt und der Wert des dielektrischen Verlusts (tanδ) = εr"/εr' bei 0,9 GHz im Bereich von 0,1 bis 1 liegt.

11. Dielektrisches Material nach einem der Ansprüche 8 bis 10, worin der Wert (εr') des reellen Teils der komplexen spezifischen induktiven Kapazität des dielektrischen Materials bei 0,9 GHz nicht weniger als 100 beträgt.

12. Dielektrisches Material nach einem der Ansprüche 8 bis 11, worin der Wert (εr') des reellen Teils der komplexen spezifischen induktiven Kapazität des dielektrischen Materials bei 0,9 GHz nicht weniger als 200 beträgt.

13. Dielektrisches Material nach einem der Ansprüche 8 bis 12, worin der Wert (εr") des imaginären Teils der komplexen spezifischen induktiven Kapazität des dielektrischen Materials bei 0,9 GHz nicht weniger als 100 beträgt.

14. Dielektrisches Material nach einem der Ansprüche 8 bis 13, worin der Wert (εr') des reellen Teils der komplexen spezifischen induktiven Kapazität des dielektrischen Materials bei 0,9 GHz nicht weniger als 300 beträgt und der Wert des dielektrischen Verlusts (tanδ) = εr"/εr' bei 0,9 GHz nicht weniger als 1,6 beträgt.

15. Dielektrisches Material nach einem der Ansprüche 8 bis 14, worin das dielektrische Material ein Blindmaterial für ein menschliches Phantommodell ist.

16. Mobiltelefon, worin ein dielektrisches Material nach einem der Ansprüche 8 bis 14 zur Verwendung als ein elektromagnetisches Wellensteuerungsbauteil montiert ist.

17. Menschliches Phantommodell, worin ein dielektrisches Material nach einem der Ansprüche 8 bis 14 als ein Blindmaterial verwendet wird.

## Revendications

1. Procédé de fabrication d'un matériau diélectrique ayant une capacité inductive spécifique, le matériau diélectrique ayant :
un matériau de base en caoutchouc siliconé ;
un matériau carboné, en une proportion de 2 à 70 % en poids par rapport au poids total du matériau diélectrique, choisi parmi le carbone sphérique, le carbone plat, les nanotubes de carbone et les fibres de carbone ayant un rapport d'aspect non supérieur à 11, le matériau carboné étant éventuellement constitué de nanotubes de carbone en une proportion de 1 à 5 % en poids par rapport au poids total du matériau diélectrique ; et de plus
un carbone conducteur de structure développée en une proportion de 1 à 20 % en poids par rapport au poids total du matériau diélectrique, ledit carbone conducteur de structure développée étant défini par une absorption d'huile DBP non inférieure à 100 cm³/100 g, l'absorption d'huile DBP étant mesurée conformément à la norme ASTM D 2414-79,
dans lequel le matériau carboné et le carbone conducteur de structure développée sont dispersés dans le matériau de base en caoutchouc siliconé pour former un mélange, et la proportion du matériau de base en caoutchouc siliconé est située dans la plage allant de 30 à 97 % en poids par rapport au poids total du matériau diélectrique,
**caractérisé en ce que**
la valeur (εr') de la partie de nombre réel et la valeur (εr") de la partie de nombre imaginaire de la capacité inductive spécifique complexe dudit matériau diélectrique sont contrôlées par les quantités de mélange dudit carbone et dudit carbone conducteur dans ledit matériau de base en caoutchouc siliconé, de façon que la valeur (εr') de la partie de nombre réel soit située dans la plage allant de 3 à 1300 à 0,9 GHz et que la valeur (εr") de la partie de nombre imaginaire soit située dans la plage allant de 0,2 à 1300 à 0,9 GHz, et que la valeur de la perte diélectrique (tanδ) = εr"/εr' soit située dans la plage allant de 0,1 à 2,5 à 0,9 GHz.

2. Procédé selon la revendication 1, dans lequel le carbone conducteur de structure développée a une surface spécifique BET non inférieure à 30 m²/g.

3. Procédé selon la revendication 1 ou la revendication 2, dans lequel la valeur (εr') de la partie de nombre réel de la capacité inductive spécifique complexe du matériau diélectrique est située dans la plage allant de 1 à 100 à 0,9 GHz, la valeur (εr") de la partie de nombre imaginaire de la capacité inductive spécifique complexe du matériau diélectrique est située dans la plage allant de 0,2 à 100 à 0,9 GHz, et la valeur de la perte diélectrique (tanδ) = εr"/εr' est située dans la plage allant de 0,1 à 1 à 0,9 GHz.

4. Procédé selon l'une quelconque des revendications 1 à 3, dans lequel la valeur (εr') de la partie de nombre réel de la capacité inductive spécifique complexe du matériau diélectrique n'est pas inférieure à 100 à 0,9 GHz.

5. Procédé selon l'une quelconque des revendications 1 à 4, dans lequel la valeur (εr') de la partie de nombre réel de la capacité inductive spécifique complexe du matériau diélectrique n'est pas inférieure à 200 à 0,9 GHz.

6. Procédé selon l'une quelconque des revendications 1 à 5, dans lequel la valeur (εr") de la partie de nombre imaginaire de la capacité inductive spécifique complexe du matériau diélectrique n'est pas inférieure à 100 à 0,9 GHz.

7. Procédé selon l'une quelconque des revendications 1 à 6, dans lequel la valeur (εr') de la partie de nombre réel de la capacité inductive spécifique complexe du matériau diélectrique n'est pas inférieure à 300 à 0,9 GHz et la valeur de la perte diélectrique (tanδ) = δr"/εr' n'est pas inférieure à 1,6 à 0,9 GHz.

8. Matériau diélectrique comprenant :
un matériau de base en caoutchouc siliconé ;
un matériau carboné choisi parmi le carbone sphérique, le carbone plat, les nanotubes de carbone et les fibres de carbone ayant un rapport d'aspect non supérieur à 11, en une proportion de 2 à 70 % en poids par rapport au poids total du matériau diélectrique, le matériau carboné étant éventuellement constitué de nanotubes de carbone en une proportion de 1 à 5 % en poids par rapport au poids total du matériau diélectrique ; et de plus
un carbone conducteur de structure développée en une proportion de 1 à 20 % en poids par rapport au poids total du matériau diélectrique, ledit carbone conducteur de structure développée étant défini par une absorption d'huile DBP non inférieure à 100 cm³/100 g, l'absorption d'huile DBP étant mesurée conformément à la norme ASTM D 2414-79,
dans lequel le matériau carboné et le carbone conducteur de structure développée sont dispersés dans le matériau de base en caoutchouc siliconé en formant un mélange, et la proportion du matériau de base en caoutchouc siliconé est située dans la plage allant de 30 à 97 % en poids par rapport au poids total du matériau diélectrique,
**caractérisé en ce que**
la valeur (εr') de la partie de nombre réel et la valeur (εr") de la partie de nombre imaginaire de la capacité inductive spécifique complexe dudit matériau diélectrique sont contrôlées par les quantités de mélange dudit carbone et dudit carbone conducteur dans ledit matériau de base en caoutchouc siliconé, de façon que la valeur (εr') de la partie de nombre réel soit située dans la plage allant de 3 à 1300 à 0,9 GHz et que la valeur (εr") de la partie de nombre imaginaire soit située dans la plage allant de 0,2 à 1300 à 0,9 GHz, et que la valeur de la perte diélectrique (tanδ) = εr"/εr' soit située dans la plage allant de 0,1 à 2,5 à 0,9 GHz.

9. Matériau diélectrique selon la revendication 8, dans lequel le carbone conducteur de structure développée a une surface spécifique BET non inférieure à 30 m²/g.

10. Matériau diélectrique selon la revendication 8 ou la revendication 9, dans lequel la valeur (εr') de la partie de nombre réel de la capacité inductive spécifique complexe du matériau diélectrique est située dans la plage allant de 1 à 100 à 0,9 GHz, la valeur (εr") de la partie de nombre imaginaire de la capacité inductive spécifique complexe du matériau diélectrique est située dans la plage allant de 0,2 à 100 à 0,9 GHz, et la valeur de la perte diélectrique (tanδ) = εr"/εr' est située dans la plage allant de 0,1 à 1 à 0,9 GHz.

11. Matériau diélectrique selon l'une quelconque des revendications 8 à 10, dans lequel la valeur (εr') de la partie de nombre réel de la capacité inductive spécifique complexe du matériau diélectrique n'est pas inférieure à 100 à 0,9 GHz.

12. Matériau diélectrique selon l'une quelconque des revendications 8 à 11, dans lequel la valeur (εr') de la partie de nombre réel de la capacité inductive spécifique complexe du matériau diélectrique n'est pas inférieure à 200 à 0,9 GHz.

13. Matériau diélectrique selon l'une quelconque des revendications 8 à 12, dans lequel la valeur (εr") de la partie de nombre imaginaire de la capacité inductive spécifique complexe du matériau diélectrique n'est pas inférieure à 100 à 0,9 GHz.

14. Matériau diélectrique selon l'une quelconque des revendications 8 à 13, dans lequel la valeur (εr') de la partie de nombre réel de la capacité inductive spécifique complexe du matériau diélectrique n'est pas inférieure à 300 à 0,9 GHz et la valeur de la perte diélectrique (tanδ) = εr"/εr' n'est pas inférieure à 1,6 à 0,9 GHz.

15. Matériau diélectrique selon l'une quelconque des revendications 8 à 14, lequel matériau diélectrique est un matériau à blanc pour un modèle de fantôme humain.

16. Téléphone mobile dans lequel un matériau diélectrique selon l'une quelconque des revendications 8 à 14 est monté pour une utilisation en tant qu'élément de contrôle d'ondes électromagnétiques.

17. Modèle de fantôme humain dans lequel un matériau diélectrique selon l'une quelconque des revendications 8 à 14 est utilisé en tant que matériau à blanc.
